# EUROPÄISCHE PATENTANMELDUNG

(11) **EP 0 693 845 A2**
(43) Veröffentlichungstag der Anmeldung: **24.01.1996**
(21) Anmeldenummer: 95110977.6
(22) Anmeldetag: 13.07.1995
(51) Int. Cl.: H04M 1/65

(54) **Digitaler Telefonanrufbeantworter**

(30) Priorität: 20.07.1994 DE 4425579; 12.05.1995 DE 19517470
(71) Anmelder: Alcatel SEL Aktiengesellschaft, D-70435 Stuttgart (DE)
(72) Erfinder: Kopp, Dieter, D-71282 Hemmingen (DE); Sienel, Jürgen, D-71229 Leonberg (DE)
(74) Vertreter: Knecht, Ulrich Karl

(57) **Zusammenfassung**

Schaffung eines voll-digitalen Anrufbeantworters mit einer Sprachsteuerung, der in der Lage ist eine Vielzahl an Funktionen auszuführen.

Software zur Ausführung von Funktionen wird in einzelne Softwaremodul zur Ausführung von Teilfunktionen aufgeteilt. Diese sind mehrfach verwendbar und sind integriert in einem digitalen Signalprozessor (DSP) des Anrufbeantworters vorgesehen.

## Beschreibung

Aus dem Stand der Technik sind vielerlei verschiedene Arten von Anrufbeantwortern bekannt, bei denen insbesondere zwischen den zwei Hauptarten, und zwar denen mit Kassetten oder mit Chip zur Speicherung von Sprache, unterschieden wird. Es gibt auch Anrufbeantworter, die sowohl einen Chip als auch eine Kassette zur Sprachspeicherung aufweisen. Hierbei sind die Ansagetexte auf dem Chip gespeichert, ankommende Nachrichten werden aber auf Kassetten aufgezeichnet.

Die Anrufbeantworter die nur einen Chip aufweisen, werden im Stand der Technik als "volldigitale Anrufbeantworter" bezeichnet, und sollen gegenüber den Anrufbeantwortern mit Kassette den Vorteil bieten, daß wegen des Wegfalls der Kassettenmechanik ein verschließloser Betrieb gewährleistet wird und daß auch die Sprachqualität erhöht wird. Die Sprachqualität aber ist nicht für alle gängigen Modelle von Anrufbeantwortern sehr überzeugend ("Anrufbeantworter: Die digitale Konkurrenz"; Funkschau 7/1994; Seiten 98 bis 103).

"Volldigitale Anrufbeantworter" wurden entwickelt, um die Größe und Kosten der Geräte zu reduzieren. Hierzu trägt die volldigitale Lösung bei, ebenso wie zu einer erhöhten Zuverlässigkeit. In den im Stand der Technik beschriebenen Anrufbeantwortern wird ein sogenannter Low-bit rate Sprachsynthesealgorithmus verwendet. Diese Anrufbeantworter mit diesem Algorithmus bieten Grundfunktionen, wie z.B. Sprachaufzeichnung, Sprachwiedergabe und Fernabfrage an ("Development of SBC recorder LSI", by: Eguchi, F. et al; Oki Technical Review; Vol. 59, no. 138; page 21 to 24; Tokio, Japan). Wenig vorteilhaft ist bei diesen Anrufbeantwortern, daß lediglich Grundfunktionen ausgeführt werden können.

Es ist Aufgabe der vorliegenden Erfindung einen Anrufbeantworter zu schaffen, der voll digital arbeitet und eine erweiterte Funktionalität aufweist.

Die Aufgabe wird erfindungsgemäß gelöst durch die Lehre des ersten Patentanspruchs.

Vorteilhaft erweist sich hierbei, daß sämtliche Funktionen des Anrufbeantworters durch Software realisiert werden. Die einzelnen Softwaremodule der Software können hierbei für mehrere unterschiedliche Funktionen verwendet werden, die sich in Grundfunktionen, wie z.B. Aufzeichnen und Wiedergeben von Nachrichten, und in Sonderfunktionen, wie z.B. digitale Freisprecheinrichtung usw. unterteilen lassen, was zu einer hoch integrierten, kompakten Lösung führt. Zusätzlich ist dies auch kostengünstig, da nicht für jede ausführbare Funktion eine eigene Hardware geschaffen und eingebaut werden muß.

Weitere vorteilhafte Ausgestaltungen sind den Ansprüchen 2 bis 9 zu entnehmen.

Im folgenden wird die Erfindung anhand von Ausführungsbeispielen und den Figuren näher erläutert. Folgende Figuren zeigen:
- Fig. 1: Blockschaltbild eines Anrufbeantworters,
- Fig. 2: Ablaufdiagramm einer Aufzeichnung,
- Fig. 3: Ablaufdiagramm einer Wiedergabe,
- Fig. 4: Ablaufdiagramm einer Spracherkennung,
- Fig. 5: Ablaufdiagramm einer Freisprecheinrichtung.

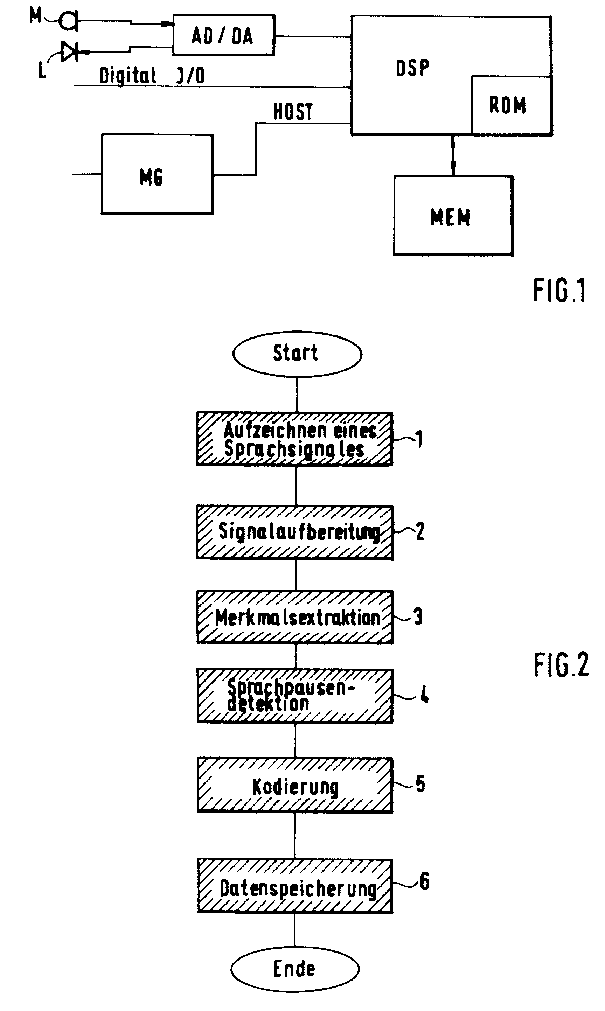

Im folgenden wird anhand von Fig. 1 der erfindungsgemäße Anrufbeantworter nach Anspruch 1 beschrieben.

Der erfindungsgemäße Anrufbeantworter besteht aus einem digitalen Signalprozessor DSP, der einen internen Speicher ROM zur Speicherung von Software besitzt. Der digitale Signalprozessor DSP ist mit einem Speicher MEM verbunden. Der Speicher MEM kann beispielsweise ein handelsübliches Audio-RAM sein oder aber ein elektrisch löschbarer, programmierbarer Festwertspeicher, ein sogeannter EEPROM (Electrically Erasable and Programmable Read Only Memory), wobei auch die blockweise löschbaren Flash-EPROM's gemeint sind. Der Speicher MEM steht dem Anrufbeantworter zur Aufzeichnung von digitalisierter Sprache zur Verfügung.

Der digitale Signalprozessor ist über eine analoge Schnittstelle mit einem Mikrofon M und einem Lautsprecher L verbunden. Der Lautsprecher L und das Mikrofon M sind dabei über einen Analog-Digital/Digital-Analog-Wandler AD/DA mit dem digitalen Signalprozessor DSP verbunden. Das Mikrofon M dient zur analogen Spracheingabe, der Lautsprecher L zur analogen Sprachausgabe.

Der Anrufbeantworter besitzt ebenfalls eine mit dem digitalen Signalprozessor DSP verbundene digitale Schnittstelle DIGITAL I/O. über die digitale Schnittstelle DIGITAL I/O kann z.B. ein PCM-Codec (Pulse-Code-Modulation-Codierer/Decodierer) angeschlossen werden.

Als weiteres Beispiel ist es möglich, daß die digitale Schnittstelle in Verbindung mit einer GCI-Schnittstelle arbeitet.

Desweiteren besitzt der Anrufbeantworter eine Rechnerschnittstelle HOST über die softwaremäßig implementierte Grundfunktionen und auch weitere Sonderfunktionen aufgerufen und aktiviert werden können. Über die Rechnerschnittstelle wird eine Verbindung zu einem Mikrocontroller MC hergestellt, um einen Kommandotransfer und Statustransfer und ebenfalls einen Nachrichtentransfer und Parametertransfer zu ermöglichen.

Im folgenden wird anhand von Fig. 2 der Ablauf einer Aufzeichnung mit dem erfindungsgemäßen Anrufbeantworter beschrieben.

In einem ersten Schritt 1 wird ein analoges Sprachsignal aufgezeichnet. In einem zweiten Schritt 2 erfolgt eine Signalaufbereitung. Beispiele für eine Signalaufbereitung sind z.B. eine Sprachsignalverarbeitung mit einer Verstärkungsregelung, die sogenannte Automatic Gain Control (AGC). Ein weiteres Beispiel für eine Signalaufbereitung ist eine Aufbereitung mittels einer sogenannten Offset-Kompensation oder mittels eines Rückkopplungsverminderers einem sogenannten Echo Cancellor. In einem dritten Schritt 3 wird eine Merkmalsextraktion durchgeführt und in einem vierten Schritt 4 wird eine Sprachpausendetektion durchgeführt. In einem fünften Schritt 5 wird codiert. Die solcher Art codierten Sprachsignale werden in einem sechsten Schritt 6 als Daten gespeichert. Die solcher Art codierten Daten werden, wie bereits vorab beschrieben, in dem Speicher MEM abgespeichert. Die sechs zuvorgenannten Schritte 1, 2, 3, 4, 5 und 6 sind Softwaremodule, aus denen sich die im Speicher ROM abgespeicherte Software zusammensetzt. Die einzelnen Softwaremodule 1 bis 6 sind mehrfach benutzbar Softwaremodule, was durch die in der Figur unterlegten, schraffierten Kästchen angezeigt ist.

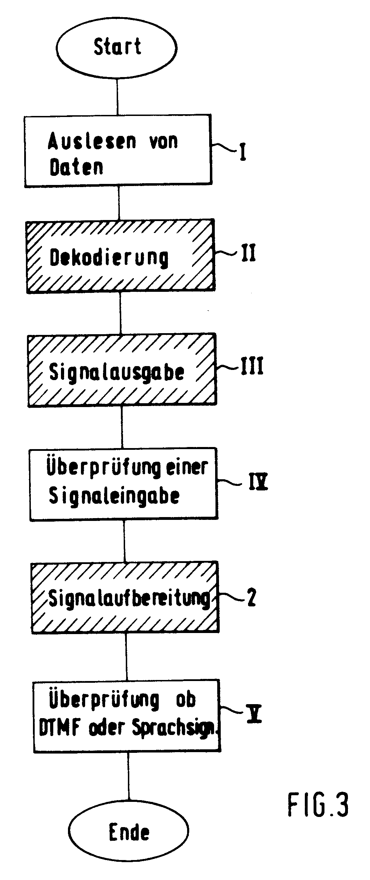

Im folgenden wird anhand von Fig. 3 ein mögliches Ausführungsbeispiel für eine Wiedergabe aufgeführt. In einem ersten Schritt I werden gespeicherte Daten aus den Speichern ausgelesen. In einem zweiten Schritt II wird decodiert. In einem dritten Schritt III erfolgt eine Signalausgabe, beispielsweise über das analoge Interface und den Lautsprecher L. In einem darauffolgenden Schritt IV wird überprüft, ob beispielsweise über das Mikrofon M und das analoge Interface eine Eingabe eines Signals erfolgt. Das Signal wird aufgenommen und im weiteren Verlauf wird in einem Schritt 2 eine Signalaufbereitung vorgenommen. Der Schritt 2 entspricht der Signalaufbereitung 2 aus Fig. 2. Im weiteren Verlauf wird in einem nächsten Schritt V festgestellt, ob eine DTMF (Dual Tone Multi Frequency) Signal oder ein Sprachsignal vorliegt. In dem hier vorliegenden Ablaufdiagramm sind die Schritte II und der Schritt III mehrfach benutzbare Softwaremodule.

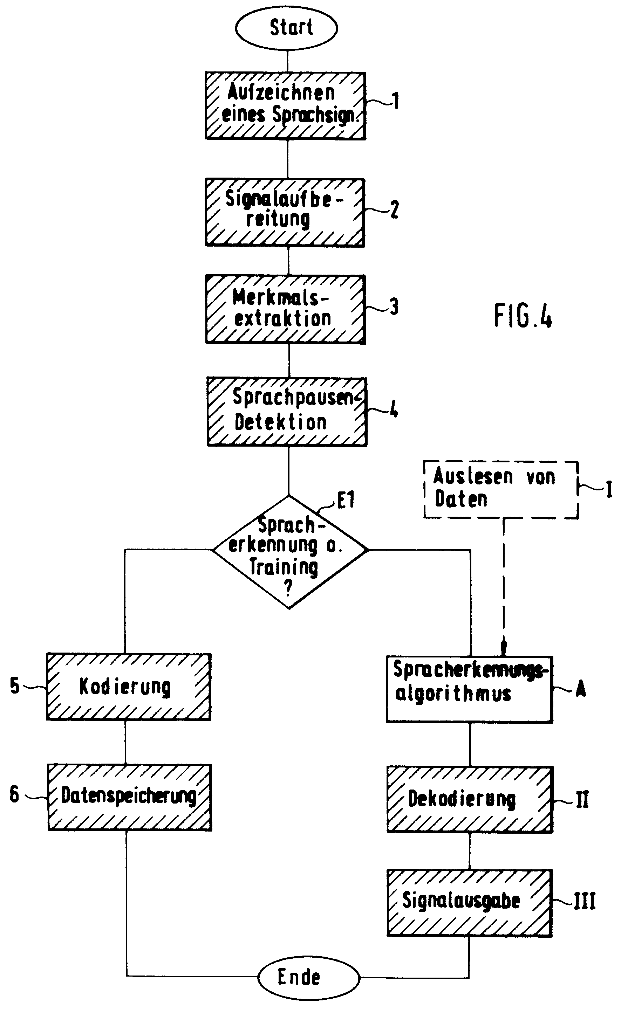

Im folgenden wird anhand von Fig. 4 der Ablauf einer Spracherkennung näher beschrieben. Die ersten vier Schritte der Spracherkennung 1, 2, 3 und 4 entsprechen den ersten vier Schritten 1 bis 4 aus Fig. 2. Demgemäß ist der erste Schritt 1 Aufzeichnen eines Sprachsignals, der zweite Schritt 2 die Signalaufbereitung gemäß der bereit vorher beschriebenen Methoden, der dritte Schritt 3 die Merkmalsextraktion und der vierte Schritt 4 die Sprachpausendetektion. In einem darauffolgenden ersten Entscheidungsglied E1 wird darüber entschieden, ob eine Spracherkennung oder ein Training von Sprache vorliegt. Für den Fall, daß ein Sprachtraining vorliegt, wird in einem fünften Schritt 5 eine Codierung und in einem darauffolgenden sechsten Schritt 6 eine Datenspeicherung vorgenommen.

Für den Fall, daß eine Spracherkennung vorliegt, wird in einem nächsten Schritt A ein Spracherkennungsalgorithmus aktiviert. Für die Spracherkennung nach Schritt A stehen die ausgelesenen Daten nach Schritt I gemäß Fig. 3 als Vergleichsdaten für eine Spracherkennung zur Verfügung. In einem darauffolgenden Schritt II, wird eine Decodierung und in einem danachfolgenden Schritt III eine Signalausgabe vorgenommen. Diese beiden Schritte II, III sind bereits in Fig. 3 näher beschrieben worden.

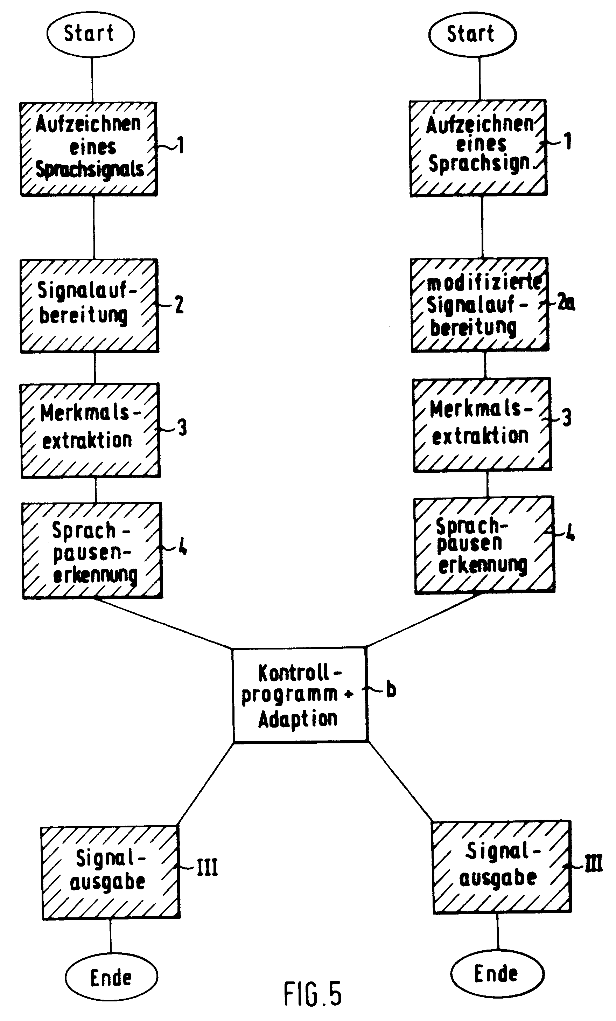

Im folgenden wird anhand von Fig. 5 der Ablauf für eine digitale Freisprecheinrichtung eingehend erläutert. In einem ersten Schritt 1 wird, wie bei den vorangegangenen Beispielen, ein Sprachsignal aufgezeichnet. In einem weiteren Schritt 2 wird eine Signalaufbereitung vorgenommen und in einem weiteren Schritt 3 und 4 eine Merkmalsextraktion und Sprachpausenerkennung durchgeführt. Der zuvor beschriebene Ablauf 1 bis 4 wird hierbei in zwei parallelen Abläufen gestartet. Der Unterschied zwischen den beiden parallelen Abläufen liegt darin, daß in einem der beiden Zweige die Signalaufbereitung Unterschiede aufweist. In diesem Zweig wird für die modifizierte Signalaufbereitung 2a eine Echokompensation durchgeführt, die durch die räumliche Entfernung und direkte Kopplung zwischen Mikrofon M und Lautsprecher L entsteht. Bei der Signalaufbereitung 2 hingegen wird eine Echokompensation des auf der Leitung entstehenden Echos durchgeführt. Beide Zweige werden zusammengefaßt, und gemeinsam in einem nächsten Schritt b mittels eines Kontrollprogramms überprüft. Ebenso wird eine Adaption vorgenommen. Daraufhin wird wiederum in zwei parallelen, unabhängigen Zweigen in einem nächsten Schritt III eine Signalausgabe vorgenommen, wobei der eine Zweig veranschaulichen soll, daß die Signalausgabe auf die Leitung erfolgt und der andere Zweig eine Signalaugabe in den Raum vornimmt.

Zu der vorangegangenen Fig. 5 bleibt noch zu bemerken, daß sämtliche Schritte bis auf Schritt b der eine Kontrolle und eine Adaption durchführt zu den mehrfach verwendbaren Softwaremodule zählen.

Zusammenfassend bleibt zu bemerken, daß sich die im digitalen Signalprozessor DSP gespeicherte Software aus den folgenden Softwaremodulen zusammensetzt:
- "1" Aufzeichnen eines Sprachsignals (eines analogen Sprachsignals auf der Leitung),
- "III" Signalausgabe (Ausgeben eines analogen Sprachsignals auf die Leitung),
- "2" Signalaufbereitung (beispielsweise AGC [Automatic Gain Control]),
- "2a" Off Set Kompensation, Rückkopplungsverminderer (Echo Cancellor),
- "3" Merkmalsextration,
- "4" Sprachpausendetektion,
- "5" Codierung (Codieralgorithmen für Audiosignale),
- "II" Decodierung (Decodieralgorithmen für Audiosignale),
- "6" Datenspeicherung.

Die vorgenannten Softwaremodule sind mehrfach benutzbare Softwaremodule. Im folgenden werden die Softwaremodule aufgeführt, die lediglich einmal oder besser gesagt für einen speziellen Ablauf einer Sonderfunktion verwendet werden.
- "I" Auslesen von Daten (Auslesen von gespeicherten Daten),
- "IV" Überprüfung einer Signaleingabe (auf eine Leitung),
- "V" Überprüfung ob DTMF oder Sprachsignal,
- "A" Spracherkennungsalgorithmen,
- "b" Kontrollprogramm plus Adaption,
- "E1" Entscheidung ob Spracherkennung oder Training vorliegt.

Die zuvor erläuterten mehrfach benutzbaren Softwaremodule und die lediglich einmal benutzbaren Softwaremodule sind lediglich eine Auswahl aller möglichen Softwaremodule, und es wird kein Anspruch auf Vollständigkeit erhoben. Wie bereits beschrieben, stehen neben den Grundfunktionen auch Sonderfunktionen des Anrufbeantworters zur Verfügung. Im folgenden soll ein Überblick über die mit der Erfindung möglichen ausführbaren Grundfunktionen und Sonderfunktionen gegeben werden. Diese sind:
- Niederbitratige Sprachcodierung/Decodierung (Low Bit Rate = 5,4 kbit/s),
- Hochqualitative Codierung/Decodierung (32 kbit/s),
- Standardansage (Out Going Message = OGM) (digital abgespeichert),
- Schneller Vor- und Rücklauf für eine Wiedergabe angekommener Nachrichten (In Coming Messages = ICM),
- "SKIP"-Funktion (schnelles Vorlaufen und Rücklaufen zwischen angekommenen Nachrichten),
- Löschen einzelner oder aller Nachrichten,
- Sprachwahl,
- Fernabfrage über Spracherkennung und/oder DTMF-Signalisierung,
- Training für Spracherkennung,
- Freisprecheinrichtung,
- Sprachwiedergabe für Benutzerführung,
- Übertragen von Nachrichten zum Rechner (HOST),
- Berechnung der verbleibenden Aufzeichnungszeit,
- Aufzeichnung und Wiedergabe von Musik,
- Auswahl spezieller Funktionen mittels eines Passwortes (Spracherkennung mit nachfolgender Sprachsteuerung),
- Aufruf spezieller Funktionen mittels eines Klatschschalters,
- Festlegung vordefinierter oder individuell definierbarer Sprachmakros.

Im folgenden werden die beiden letztgenannten Sonderfunktionen näher erläutert.

Klatschschalter arbeiten nach dem bekannten Prinzip, daß, wenn ausgelöst durch ein Klatschen, eine vordefinierte Energieschwelle überschritten wird eine Folgefunktion ausgelöst wird. Desweiteren kann auch, ausgelöst durch ein Klatschen, das dabei auftretende spezielle Frequenzsprektrum wie bei der Spracherkennung erkannt werden, und wenn ein Klatschen als solches erkannt wird, wird eine Folgefunktion ausgelöst.

Verwendung findet ein Klatschschalter beispielsweise in folgenden Fällen.

Ein digitaler Anrufbeantworter wird in einen Bereitschaftsmodus gebracht (Stand-by). Aus einem solchen Zustand heraus wünscht ein Benutzer beispielsweise eine beliebige Funktion, wie z.B. das Abhören der aufgezeichnedten Nachrichten, zu aktivieren. Um eine solche Aktivierung vorzunehmen klatscht der Benutzer in die Hände und aktiviert somit beispielsweise die Spracherkennung, die dazu dient weitere Grundfunktionen oder Sonderfunktionen auszulösen. Zur Vermeidung, daß durch ein anderes, ähnlich lautes oder vom Frequenzspektrum ähnliches Geräusch, der digitale Anrufbeantworter aus dem Bereitsachftsmodus in den Betriebsmodus gebracht wird, kann beispielsweise ein Zeitglied vorgesehen werden, welches für den Fall, daß keine weitere für den digitalen Anrufbeantworter erkennbare Funktion auftritt, diesen in den Bereitschaftsmodus zurückschaltet.

Zur Beendigung einer Funktion und zum Zurückschalten in den Bereitschaftsmodus kann beispielsweise vorgesehen werden, daß dieses durch ein zweifaches, aufeinanderfolgendes Klatschen ausgelöst wird.

Für den Fall, daß das Klatschen über das Frequenzspektrum erkannt wird, werden folgende zuvor bereits erläuterte Sonderfunktionen eingesetzt.

Soll das Klatschen über das Frequenzspektrum erkannt werden, wird, wie bei einer Spracherkennung, eine Merkmalsextraktion und Sprachpausenerkennung durchgeführt. Dadurch kann ein Klatschen eindeutig als Klatschen identifiziert werden.

Als weiteres Ausführungsbeispiel ist es möglich, bei einer ankommenden Nachricht eine Mithörfunktion zu aktivieren. So kann beispielsweise bereits bevor der Ruf angenommen wird, zwischen Rufzeichen durch Klatschen eine Mithörfunktion aktiviert werden.

Als weitere Funktion können vordefinierte oder individuell definierbare Sprackmakros festgelegt werden. Unter Sprachmakros wird hierbei eine Anzahl an Befehlen verstanden, die nacheinander auszuführen sind, um in ein spezielles Untermenue zu gelangen, und die durch Aufsagen eines einzigen Wortes oder Wortteils ausgelöst werden.

Beispielsweise bedarf es mehrerer Einzelbefehle um eine spezielle Einstellung an dem digitalen Anrufbeantworter vorzunehmen. Ebenso bedarf es mehrere Befehlsschritte, um ein Mithören bei einem ankommenden Ruf einzustellen. Dazu muß der Anrufbeantworter aus dem Bereitschaftsmodus über Betätigung einer Taste "Weitere" oder durch Einsprechen von "Weitere" in ein Untermenue in dem "weitere" Funktionen eingestellt werden können, gebracht werden. Danach muß "Einstellungen" eingegeben oder eingesprochen werden. In diesem weiteren Untermenue stehen wieder mehrere Möglichkeiten zur Auswahl, aus denen die Funktion "Mithören" ausgewählt wird. Hierbei besteht als letzte Möglichkeit der Auswahl noch die Entscheidung an, ob das "Mithören" eingeschaltet oder ausgeschaltet werden soll, und ob dies abgespeichert werden soll, damit der Zustand erhalten bleibt. Diese 5 Schritte können nun durch Definition eines Sprachmakros durch Einsprechen eines einzigen Wortes oder Wortteils automatisch ausgelöst werden. Beispielsweise könnte hier durch das Einsprechen des Wortes "Mithören" die 5 Schritte ausgelöst werden.

Ein solches Sprachmakro kann entweder bereits vorab vorgesehen sein oder kann von einem Benutzer individuell definiert werden, wobei der Benutzer vorsehen kann, eine spezielle Funktion auch durch ein Phantasiewort, wie z.B. "Abrakadabra" zu aktivieren. Eine individuelle Definition findet insbesondere dann Anwendung, wenn ein Benutzer die speziell von ihm am häufigsten benutzten Untermenues derart durch Makrobefehle im Aufruf vereinfachen möchte. Derart können desweiteren persönliche Paßworte über Sprachmakros verändert und neu eingegeben werden. Weitere Einstellungen wie z.B. Lautstärke, Rufton, Auswahl des Wahlverfahrens und Wähltonerkennung sind über diese Sprachmakros ebenfalls ohne großen Aufwand neu einstellbar oder veränderbar.

## Patentansprüche

1. Digitaler Anrufbeantworter mit einer Sprachsteuerung bestehend aus:
- einem digitalen Signalprozessor (DSP) mit einem Speicher (ROM) zur Speicherung von Software zur Ausführung von Grundfunktionen und von Sonderfunktionen,
- einem weiteren Speicher (MEM) zur Sprachspeicherung ,
- einer analogen Schnittstelle mit einem Analog/Digital-Digital/Analog-Wandler (AD/DA) und damit verbundenem Lautsprecher (L) und Mikrofon (M), zur Spracheingabe und Sprachausgabe,
- einer Rechnerschnittstelle (HOST) zum Aufrufen und Starten von Grundfunktionen und Sonderfunktionen,
bei dem die Software zur Ausführung von Grundfunktionen aus einer Vielzahl von Softwaremodulen zur Ausführung von Teilfunktionen der Grundfunktionen besteht, bei dem die Software zur Ausführung von Sonderfunktionen aus einer Vielzahl von Softwaremodulen zur Ausführung von Sonderteilfunktionen der Sonderfunktionen besteht, und bei dem zur Ausführung der Sonderfunktionen, Softwaremodule zur Ausführung von Teilfunktionen und Softwaremodule zur Ausführung von Sonderteilfunktionen verwendet werden.

2. Anrufbeantworter nach Anspruch 1, bei dem die Grundfunktionen Sprachaufzeichnung, Sprachwiedergabe und Spracherkennung sind, und die Sonderfunktionen Frei sprechen und eine sprachgesteuerte Fernabfrage sind.

3. Anrufbeantworter nach Anspruch 1, bei dem der eine weitere Speicher (MEM) zur Speicherung von Sprache, ein Audio-RAM oder ein EEPROM (Electrically Erasable and Programmable Read Only Memory) ist.

4. Anrufbeantworter nach Anspruch 1 oder 2, bei dem mittels eines Mikrokontrollers (MC), der über die Rechnerschnittstelle (HOST) mit dem digitalen Signalprozessor (DSP) verbunden ist, ein Kommandotransfer, Statustransfer, Parametertransfer und Nachrichtentransfer durchgeführt wird.

5. Anrufbeantworter nach Anspruch 1, bei dem die Softwaremodule zur Ausführung von Teilfunktionen für ein
- Aufzeichnen eines analogen Signales,
- Aufbereiten eines aufgezeichneten Signales,
- Codieralgorithmen für Audiosignale,
- Decodieralgorithmen für Audiosignale,
- Ausgeben eines analogen Signales,
- Speichern und Verwalten von Daten,
und die weiteren Softwaremodule zur Ausführung von Sonderteilfunktionen für
- Algorithmen zur Merkmalsextraktion und zur Sprachpausendetektion,
- Spracherkennung und/oder Tonerkennungsalgorithmen,
- Erzeugen einer Sprachausgabe zur Benutzerführung und
- Kontrollfunktionen für die digitale Freisprecheinrichtung
verwendet werden.

6. Anrufbeantworter nach Anspruch 1, mit einer digitalen Schnittstelle (Digital I/O) zur Eingabe und Ausgabe digitaler Signale bei Verwendung des Anrufbeantworters in einem digitalen Kommunikationsnetz.

7. Anrufbeantworter nach Anspruch 5, bei dem ein Klatschschalter zur Aktivierung und/oder Deaktivierung von Funktionen implementiert ist.

8. Anrufbeantworter nach Anspruch 1, bei dem Sprachmakros zur Ausführung von Grundfunktionen und zur Ausführung von Sonderfunktionen implementiert werden.

9. Anrufbeantworter nach Anspruch 8, bei dem die Sprachmakros vordefiniert sind oder bei dem die Sprachmakros individuell definierbar sind.
